Europäisches Patentamt

**European Patent Office**

Office européen des brevets

(11) Publication number: **0 227 643**
**A2**

## (12) EUROPEAN PATENT APPLICATION

(21) Application number **87200084.9**

(22) Date of filing: **08.07.81**

(51) Int. Cl.⁴: **B 64 C 9/14**
**B 64 C 13/34**

(30) Priority: **13.08.80 US 177675**

(43) Date of publication of application:
**01.07.87 Bulletin 87/27**

(84) Designated Contracting States: **DE FR GB IT NL**

(60) Publication number of the earlier application in
accordance with Art. 76 EPC: **0 045 988**

(71) Applicant: **THE BOEING COMPANY**
**P.O. Box 3707 Mail Stop 7E-25**
**Seattle Washington 98124-2207 (US)**

(72) Inventor: **Cole, James Byron**
**8212, S.E., 62nd Street**
**Mercer Island, WA 98040 (US)**

(74) Representative: **'t Jong, Bastiaan Jacobus et al**
**OCTROOIBUREAU ARNOLD & SIEDSMA Sweelinckplein**
**1**
**NL-2517 GK 's-Gravenhage (NL)**

(54) **Extendible airfoil track assembly.**

(57) An actuation and extension mechanism for aerodynamic
high-lift devices such as a wing leading edge slat or a wing
trailing edge flap: wherein an aerodynamic panel (20) is
connected to one end of an extendible track member (23) that
is supported and guided by its other end through rollers (26)
fixedly mounted to wing rib structure (15). The track member
incorporates a separate rack gear segment (24) internally
thereof as part of the extension or retraction mechanism and
this combination of track and gear segment provides the
primary support and drive means to the high-lift device. without
compromising the structural strenth. safety. or operational
reliability of said combination.

FIG. 3

EP 0 227 643 A2

**Description**

EXTENDIBLE AIRFOIL TRACK ASSEMBLY

The invention relates to a mechanism for extending a high-lift device such as an auxiliary airfoil relative to a main airfoil, comprising a carrier track connected to said high-lift device, extending substantially chordwise of said main airfoil and comprising a toothed section, guide means secured to said main airfoil and being in guiding contact with said track for support thereof, and a pinion gear adapted to gear in meshing engagement with said toothed section for extending and retracting the high-lift device. By extending the high-lift device the low-speed aerodynamic performance of an airplane during the landing or take-off mode of operation is improved.

A mechanism of the kind set forth above is known from US-A-3 089 666. The carrier track has gear teeth cut into a lower surface for meshing with the pinion drive gear. However, because the track is the main support for the aerodynamic loads imposed on the operatively extended airfoil, any notches or irregularities in the lower surface of the track, such as the gear teeth, set up a notch-stress condition that compromise the structural strength and stress safety, which is unacceptable for modern commercial passenger carrying airplanes.

An object of the invention is to provide a mechanism of the kind set forth above which does not have these disadvantages and can comply with present safety standards.

This object is obtained with a mechanism according to the invention in which the carrier track has a hat-shaped cross-section forming a channel along the length thereof, and in that the toothed section is separate from the carrier track and is formed by a gear rack, mounted within said track channel with its gear teeth facing downwardly. Therefore, the notches are eliminated from the support member so that no stress condition is set up. Another advantage is that each element can be of a different material and can be heat treated differently so as to provide the optimum hardness and structural strenth characteristic for stress safety. Because of the hat-shaped cross-section of the carrier track a high resistance against flexure and collapsing is obtained.

US-A-2 346 424 shows a rack mechanism comprising a pinion gear in combination with a compound rack member. The rack member consists of a slack chain, stiffened by incorporating it into a slotted tube with C-shaped cross-section.

According to a preferred embodiment of the invention the depth of the channel is at least equal to the overall height of the gear rack. The inner facing sides of the interior channel form a raceway for maintaining the pinion drive gear. Also the gear rack teeth are protected from accumulating dirt or material that would jam the gear meshing relationship with the pinion drive gear.

An advantage of positioning the gear rack segment up inside the channel of the support track is that it allows the pinion drive gear to be positioned up higher into the wing cavity and reduces the possibility of protrusion or bulging from the lower surface of the wing to provide clearance.

Another advantage is that the installation of the combination of a slat support track and gear rack segment requires a minimum number of cutouts through the fixed wing leading edge; whereas, with known actuating systems incorporating ball-screws or linear actuators, an additional pair of cutouts is required per slat panel, thereby increasing aerodynamic drag.

The invention will be further explained in the following with reference to the accompanying drawings in which:

FIG. I is a plan view of an outboard wing leading edge section with a spanwise series of slat panels.

FIG. 2 is a chordwise cross-sectional view taken along the lines 2-2 of FIG. I in the direction indicated and depicts a wing leading edge slat at its fully retracted position whereat it completes the leading edge profile of the wing airfoil section; and this slat position is generally for the cruise flight mode of airplane operation.

Fig. 3 is a view similar to FIG. 2 with the leading edge slat at a forward extended operating position whereat an aerodynamic slot is formed between the leading edge of the fixed wing structure and the trailing edge of the extended slat panel; and this slat position is generally used for the landing mode of airplane operation.

FIG. 4 is an exploded perspective view of the slat support track and an internally mounted gear rack segment.

FIG. 5 is a sectional view taken along the lines 5-5 of FIG. 2 in the direction indicated.

FIG. 6 is a sectional view taken along the line 6-6 of FIG. 2 in the direction indicated.

FIG. 7 is a lower plan sectional view taken along the lines 7-7 of FIG. 3 in the direction indicated.

FIG. 8 is a view similar to FIG. 2 of a second embodiment of a slat extension mechanism showing a slat support track having an internally mounted series of rollers which are arranged to engage a sprocket drive gear.

FIG. 9 is a chordwise cross-sectional view of a representative third embodiment showing an airfoil trailing edge section having a double flap assembly in its fully retracted position and an extension mechanism comprising a carrier track with an internally mounted gear rack segment for engaging a pinion drive gear.

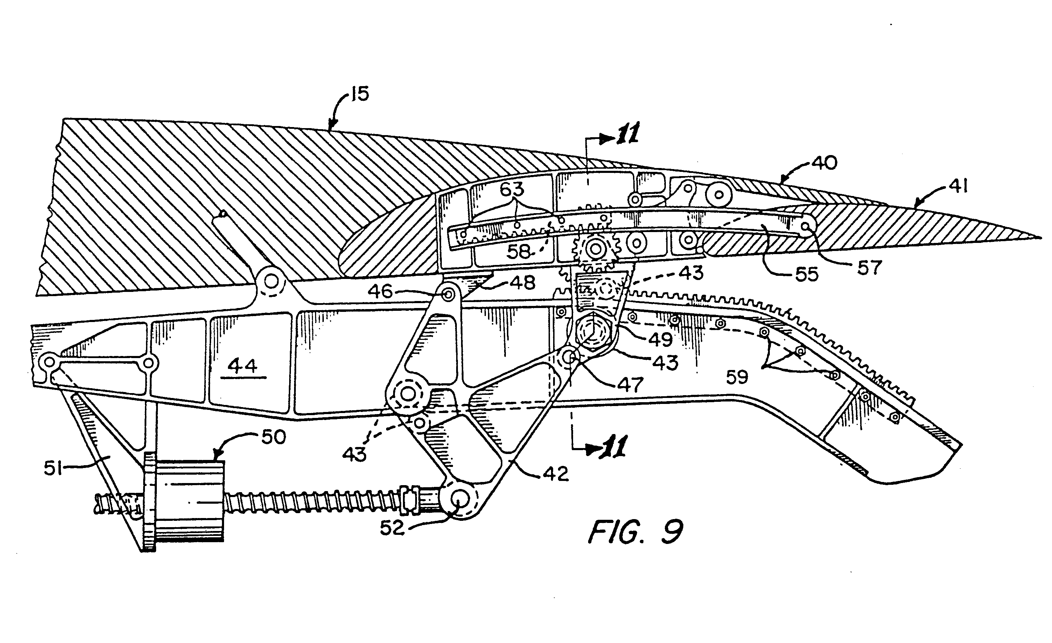

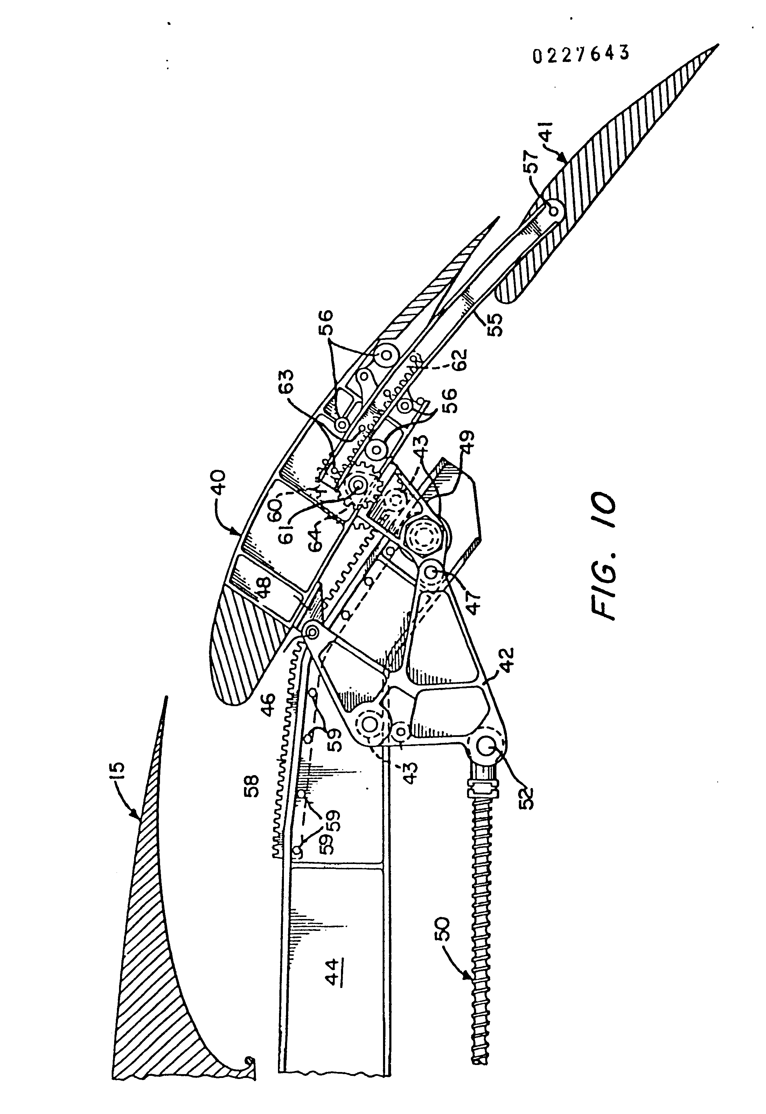

FIG. I0 is a view similar to FIG. 9, showing the airfoil flap assembly at a fully extended position, whereat the extension mechanism produces a double-slotted flap arrangement.

FIG. II is an enlarged sectional view taken along the line II-II of FIG. 9 in the direction indicated.

FIG. I is a plan view of an outboard. leading edge section of an airplane wing I5 having a front wing spar I7, leading edge ribs I8. main rib members I9 and a spanwise series of slat panels 20 along the wing leading edge. A power drive system is mounted spanwise along the front wing spar I7 for extending or retracting the slat panels 20 relative to a fixed wing leading edge: and comprises: a power drive unit (not shown) such as a hydraulic or electric drive motor for rotating a spanwise series of axially aligned shafts or torque tubes 2I, at a relatively high speed. The high speed shafts 2I operate the extension or retraction mechanism of the slat panels 20 through a speed reducer and torque converter unit hereinafter referred to as rotary actuator 22. Each of the rotary actuators 22 is shown mounted adjacent to a pair of wing leading edge ribs I8 which straddle a slat support track 23 having a gear rack segment 24 and pinion drive gear 25 splined to the output drive shaft of the rotary actuator 22. The high speed shafts 2I operate through the rotary actuators 22 and function to controllably tie and synchronize one slat panel to its adjacent slat panel. without any additional slat drive synchronization mechanism being required.

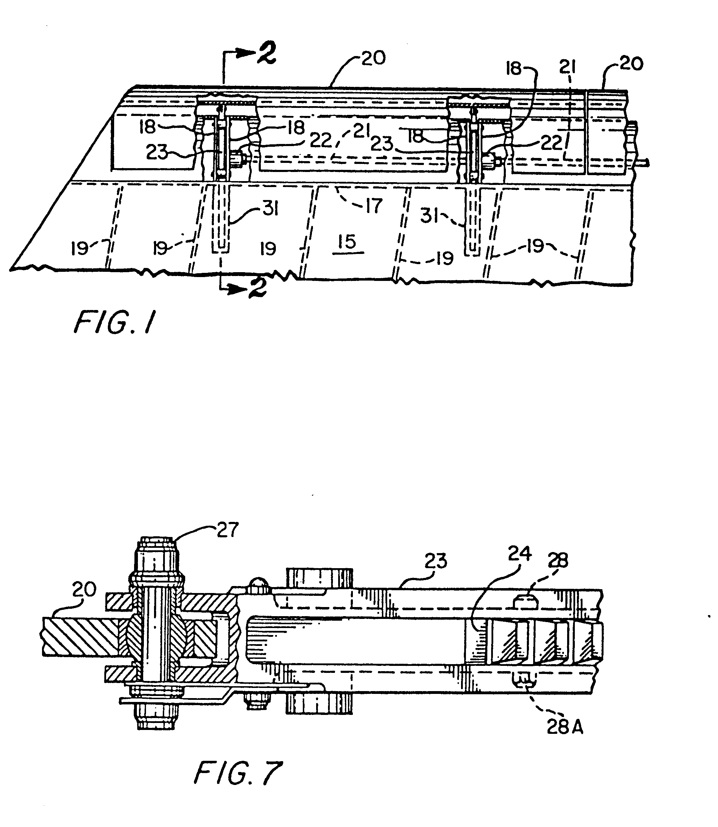

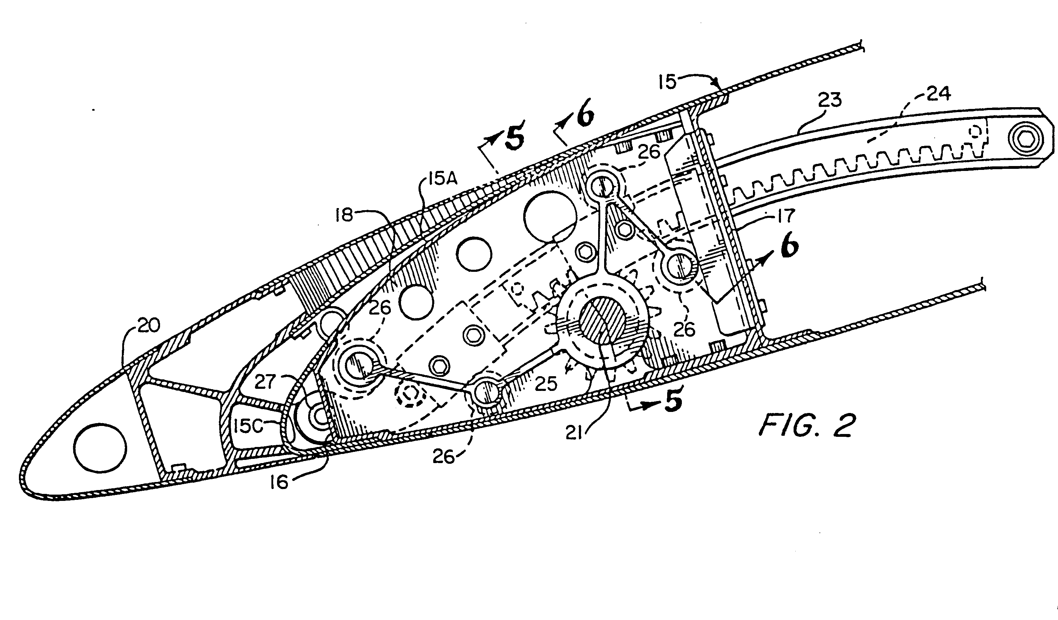

FIG. 2 is a chordwise cross-sectional view taken in the direction indicated by the line 2-2 of FIG. I and shows a wing leading edge slat 20 at a fully retracted position whereat it completes the leading edge aerodynamic profile of the wing airfoil section for the cruise flight mode of airplane operation. Due to limited cross-sectional thickness of the airfoil at the location of the spanwise outboard slat panel 20, there is a limited stowage volume for a slat actuating mechanism. However. a preferred embodiment of the present invention, which relates to the combination of a slat support track 23 and a gear rack segment 24 that meshes with a pinion drive gear 25. is capable of being housed completely within the leading edge airfoil section envelope of the wing: and this combination is capable of providing the relatively large amount of travel required for slat panel extension or retraction.

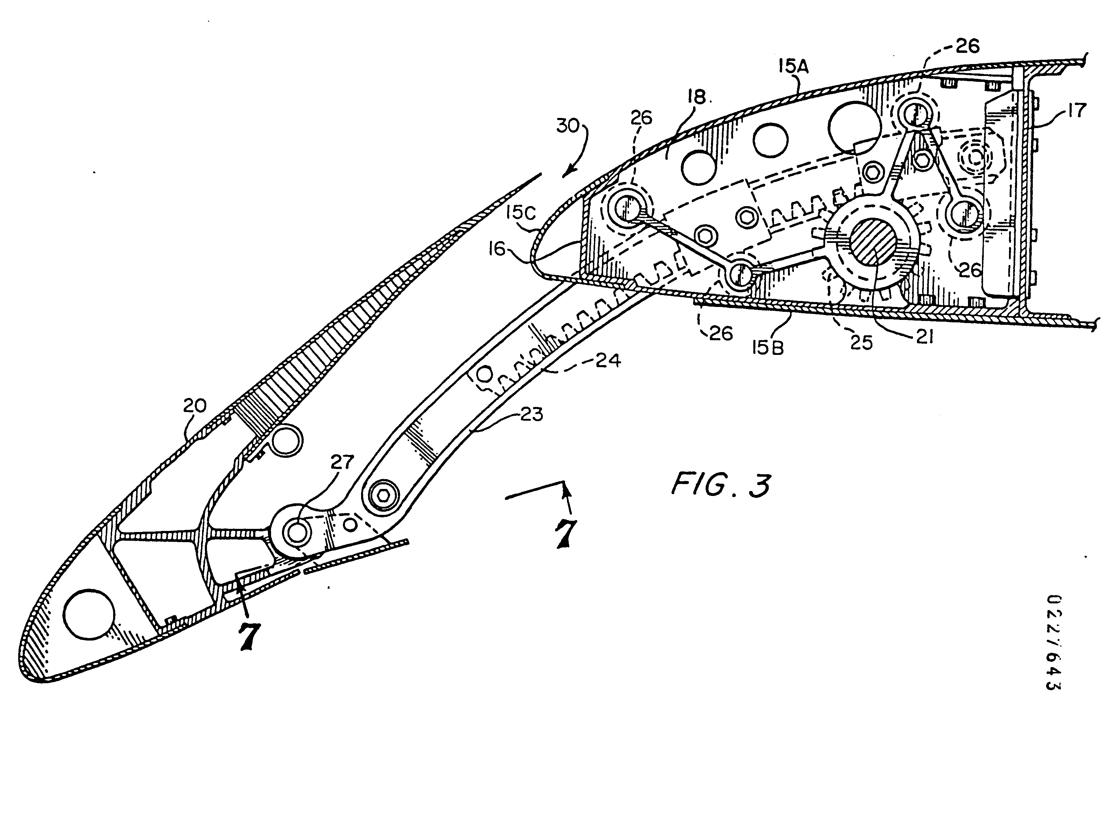

FIG. 3 is a chordwise cross-sectional view similar to FIG. 2 with the slat panel 20 extended. by the preferred embodiment of a track extension mechanism, to a forward operating position: whereat. an aerodynamic slot 30 is formed between the leading edge of the fixed wing structure and the trailing edge of the extended slat panel 20: and this slat position is generally used for the landing mode of airplane operation.

The fixed leading edge section of the wing comprises: an upper surface skin panel I5A. a lower surface skin panel I5B. and the upper and lower skin panels I5A and I5B are attached to a rigid leading edge nose structure I5C having a spanwise nose beam I6: and this entire structure is supported by chordwise wing ribs I8 which are fixedly attached to a spanwise structural member such as the front wing spar I7.

Each individual slat panel 20 is supported in the extended operating position shown in FIG. 3 by the curved track 23 which is mounted on rollers 26 having their rotational axis fixed to the wing rib I8.

These curved slat support trackes 23 are main carrier tracks for the slat panels 20.

The forward end of these tracks 23 is pivotally connected at 27 to the slat panels 20: and the arcuate extension or retraction motion of the main carrier tracks 23 is about a theoretical center-of-rotation (not shown). There are two spanwise spaced main carrier tracks 23 for support of each individual slat panel 20: and the tracks 23 need not be located as shown in FIG. I. but they could be located at the ends of the slat panel 20 or spaced spanwise apart at an optimum structural distance of approximately one-fourth of the length of a slat panel 20. When the slat panel 20 is in the fully retracted position shown in FIG. 2, the main carrier tracks 23 protrude aft through a small opening in the front wing spar I7 and this protrusion of the track, has a fluid tight enclosure 3I, shown in FIG. I, because the interior of the wing is usually a fuel bay area.

Each individual slat panel 20 is supported in the extended position shown in FIG. 3 by the curved track 23 having an internally mounted gear rack segment 24 which engages the pinion drive gear 25.

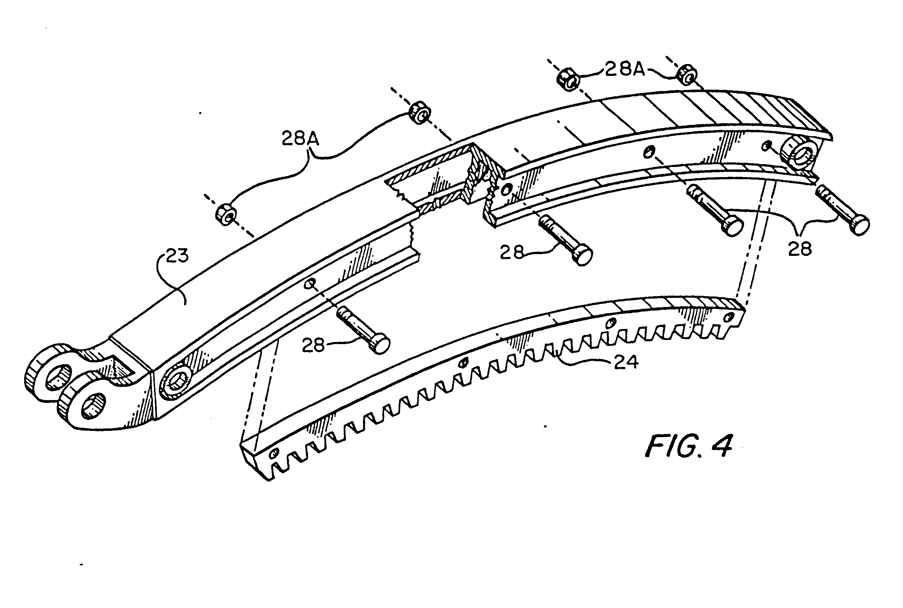

FIG. 4 is an exploded perspective view of the slat support track 23 having a gear rack segment 24 as a separate element. fastened within the channel of the hat-shaped cross section of the track by bolts 28 and nuts 28A. The gear rack segment 24 is not made integral with the support track 23: and each of them: is of a different material, is heat treated differently, and has a different hardness and strength characteristic. The support track material is a 4340 MOD high heat treat alloy steel. high heat treated to 270-300 ksi (1860-2070 MPa). Further. it is desirable to keep them as separate elements; because, the root of the gear tooth profile is more susceptible to crack propagation when subjected to high tension stresses. From a safety standpoint. it would be better if the fracture were isolated to the gear rack segment 24 as opposed to the slat support track 23. The present configuration. isolates the gear rack segment 24 from the high tension stresses imposed on the outer fibers of the track 23 lower surface; and this arrangement not only reduces the possibility of fatique cracking. but if such cracks were to develope they would be isolated from the slat support track 23 and not contribute to its failure. There are several fasteners 28. 28A. holding the gear rack segment 24 within the channel of the slat support track 23 and even if a section of the gear rack segment 24 were to fail through fracture, it may still remain fastened in place and continue to operate satisfactorily. However. if the gear teeth were machined in the lower surface of the slat support track 23 and if any crack stress propogation were to take place. then because the track 23 is the primary aerodynamic load support member for the slat panel 20, the safety of the aircraft would be compromised. For these reasons. it would be undesirable to make these two elements integral.

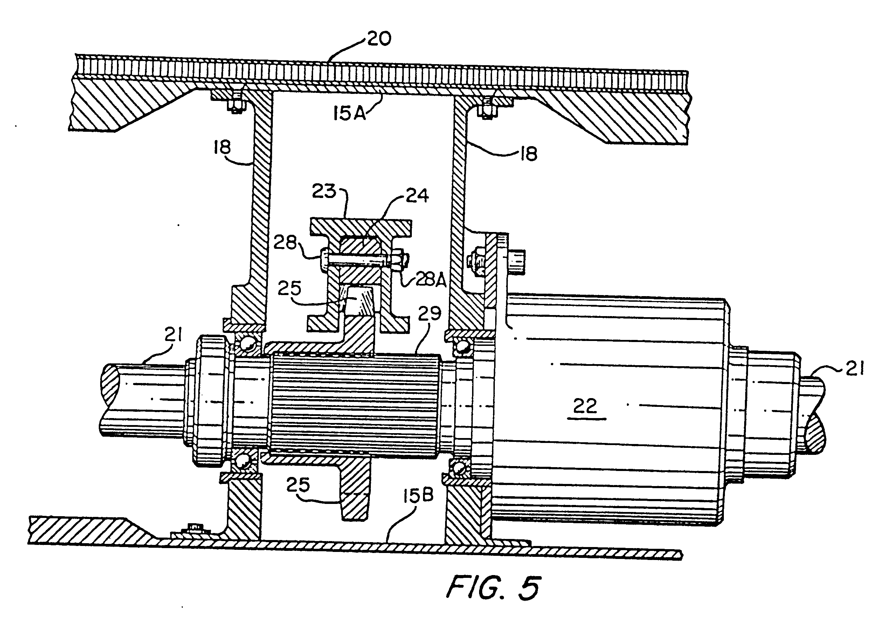

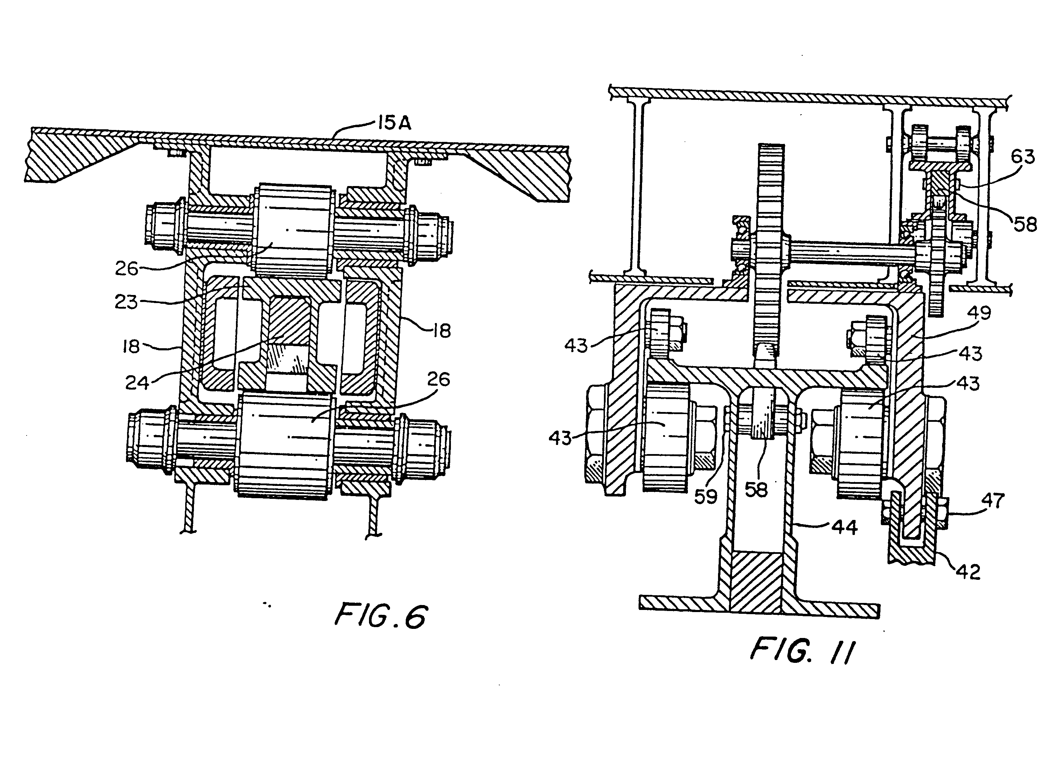

FIGS. 5, 6. and 7 are sectional views taken along the lines 5-5. 6-6. and 7-7 respectively of FIGS. 2 and 3.

Referring to FIGS. I and 5. the drive gear 25, track 23 and rollers 26 are centered spanwise between a pair of wing ribs 18 which provide a structurally straddled support. The axially aligned series of high speed shafts 21 rotate within the approximate range of 600 to 1,000 r.p.m. and go into and through actuators 22 which comprise a planetary gear mechanism of about a 200:1 reduction ratio and which rotate a splined output sleeve 29 at a relatively slow rate of speed. The actuator output sleeve 29 is splined to drive gear 25 which meshes with gear rack segment 24 to extend or retract the slat panel 20. The spanwise series of high speed shafts 21 function to synchronize the extension or retraction sequence of the spanwise series of slat panels 20.

One of the problems in getting maximum extension travel of a slat panel, from the fixed leading edge portion of a wing, is that as the cross-sectional thickness of a wing airfoil section decreases, it becomes more and more difficult to design a simple slat actuating mechanism that will: operatively extend a slat panel to the distance shown in FIG. 3; function satisfactorily throughout the complete extension and retraction cycle; and still be capable of being stowed within the wing cavity area as shown in FIG. 2. It is conceivable that a ball-screw jack or a linear actuator, with one end pivotally connected to the slat panel and the other end connected to the front wing spar. as in generally known slat extension systems. could be used to produce a maximum slat extension similar to the present invention: however. the distance between the wing leading edge 15C and the front spar 17 is a fixed amount which limits the length of a linear actuator. This distance is usually inadequate for maximum extension even when the attachment points are located as far forward in the slat nose structure, and as far aft against the front spar 15 as possible. When this is done. the design is further compromised because the actuator attachments have poor accessibility and complicate the slat and spar structures. To obtain maximum extension usually requires a telescoping type of actuator. i.e., a screw within a screw or a cylinder within a cylinder. These devices are heavier, more costly and less reliable than conventional units. In contrast, maximum extension is no problem with a rack and pinion gear drive since the rotation of the pinion gear is unlimited and the gear rack may be extended to the full length of the support track. Another disadvantage of using linear actuators is the weight and cost of additional attachment fittings which must be incorporated in the slat and fixed leading edge structures to mount each actuator. Further. it will also be evident that a substantial cutout will have to be made in the undersurface of the fixed leading edge portion of the wing for clearance of said actuators and that these cutouts will have to be in addition to those made for the set of slat support tracks and the set of programming tracks or mechanism, because a typical extension system for a single slat panel generally requires: a set of support tracks; a set of programming members: and a set of actuation members such as ball-screws or linear actuators. Also. for each of these slat extension sets. it is generally necessary to provide a pair of wing ribs for structural support. These cutouts in the fixed leading edge cause an irregularity from an aerodynamic airflow standpoint because they disrupt the airflow through the aerodynamic slot shown in FIG. 3.

Further, referring to FIGS. 2 to 5, it will be noted that the gear rack segment 24 is located up inside the channel of the slat support track 23 and this allows the drive gear 25 to be raised up higher into the wing cavity so that it will not protrude below the lower surface of the wing. Referring to the outboard slat panel 20 shown in the plan view of FIG. I, because wings generally taper in planform and thickness toward the tip. the airfoil cross-sectional area forward of the front wing spar 17. in generally known slat extension systems. is such that there is insufficient area for installing said known systems and still be capable of producing the amount of slat travel or extension distance of the present invention, without extreme complexity.

The slat support track has to fit within the cross-sectional contour area of the wing airfoil section and there has to be a certain amount of space left at the top of the wing cavity for structural support material. Also, in order to aerodynamically program the slat panel extension positions, a certain amount of space, both above and below the track, is necessary for properly locating and mounting the rollers that support the track. The operating positions of the slat panel, for producing satisfactory aerodynamic characteristics, substantially determines the location of the track and rollers; and in most cases. the track will be positioned closer to the upper surface of the wing because of the curvature of the track which follows the upper surface curvature. Therefore. the largest space that remains in the airfoil envelope for locating an actuating mechanism is that area between the track and the lower surface of the wing. Even though this is the largest remaining area for placement of an actuating mechanism it is still critical in depth because the most outboard airfoil cross-sectional contour, at the location of the outboard slat panel, is quite slender in comparision to an inboard slat panel location where it is quite thick. Therefore a close relationship between the center line of the track and axis of the drive gear. as shown in the present invention, is important since it provides a minimum depth actuator envelope for fitting the drive combination within the critical outboard cross-sectional area.

Referring to FIGS. 2 and 3, it can be seen that if the drive gear 25 had to engage gear teeth that were on the undersurface of the slat support track 23. the drive gear would have to be lowered and would possibly protrude from the lower surface of the wing. This happens because of the added dimension of the gear rack teeth on the undersurface of the slat support track. the wing cavity area is reduced in size. making it almost impossible to house a drive gear of the proper size and still have sufficient structure remaining on the wing rib for adequately supporting the power drive system. Therefore, by the method of combined construction of slat support track of the present invention. i.e., the cross-sectional hat-shape construction of track member 23 with a separate and internally mounted gear rack segment 24, a mechanical utilization is made of the track member which is relied upon primarily for the main structural support of the slat panel.

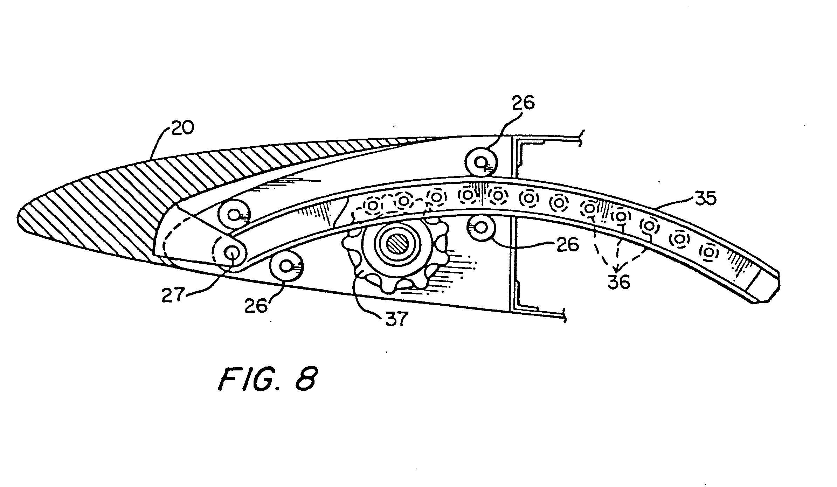

FIG. 8 shows a second embodiment slat extension mechanism having a slat support or carrier track 35, similar to track 23 in FIG. 4, with a series of internally mounted rollers 36 forming a roller rack segment for meshing engagement with a pinion sprocket drive gear 37, similar to the rack and pinion arrangement of the first embodiment.

FIGS. 9 to II, show a third embodiment of the present invention applied to an airplane wing I5 having a trailing-edge flap installation. FIGS. 9 and I0, are chordwise cross-sectional views of a plural section flap at a fully retracted position and at fully extended position, respectively; and FIG. II is an enlarged sectional view taken along the line II-II of FIG. 9 in the direction indicated. The double flap assembly extends along the trailing edge portion of the wing I5; and comprises: a fore flap section 40 and an aft flap section 4I.

The flap actuating mechanism of the present invention provides a coordinated movement between the forward retracted position shown in FIG. 9 in which position the flap sections will be during cruise flight operation of an airplane; and the maximum rearwardly extended and downwardly deflected position shown in FIG. I0 in which position the flap sections will be during the approach and landing operation of the airplane. The flap sections, when in the position shown in FIG. I0 have been moved chordwise rearwardly to a maximum extent from their position in FIG. 9 and the flap sections have increased the effective chordwise expansion of the wing area considerably. Between the position of the flap sections shown in FIG. 9 and their position shown in FIG. I0, the flap sections will have been tilted downwardly relative to the wing I5, to a higher angle-of-incidence, so as to provide the maximum lift configuration of the flap assembly for use during the approach and landing operation of the airplane.

The forward flap section 40 is moved from the wing I5, by a first actuating mechanism; and the rear flap section 4I is moved from the forward flap section 40 by a second actuating mechanism. The purpose of the first and second actuating mechanism is to effect a chordwise translational movement of a flap section, relative to structure which supports it. In the case of the forward flap section 40, such chordwise movement will be relative to the wing I5; and with respect to the rear flap section 4I, the chordwise movement will be with respect to the forward flap section 40. Since the rear flap section 4I is supported from the forward flap section 40, the rear flap section 4I will be moved chordwise rearward with respect to the wing I5, by the chordwise movement of the forward flap section 40 relative to the wing; and in addition, the rear flap section 4I will be moved chordwise relative to the forward flap section 40 and the wing I5, by the action of the second actuating mechanism which supports the rear flap section 4I from the forward flap section 40.

The first actuating mechanism for the fore flap section 40, comprises: a support carrier 42 mounted through rollers 43, to a cantilever beam 44 which is fixed structurally at its forward end (not shown) and through mounting lug 45 to the wing I5; said support carrier 42 is pivot connected at 46, 47 to lugs 48, 49 which are secured to the fore flap section 40; and a ball-screw actuator 50 secured at one end through a mounting bracket 5I to the cantilever beam 44, and at the other end through pivot connection 52 to the fore flap support carrier 42.

The second actuating mechanism for the aft flap section 4I, comprises: a curved carrier track 55 mounted along its forward portion on rollers 56, having their rotational axis fixed to the fore flap 40, and at its rearward end at pivot connection 57 to the aft flap 4I; and a dual rack and pinion drive mechanism for movement of the aft flap section 4I relative to the fore flap section 40.

The dual rack and pinion drive mechanism, comprises: a first gear rack segment 58 fastened by bolts 59 to cantilever beam 44; a first pinion gear 60 having its rotational axis 6I fixed to the fore flap 40; a second gear rack segment 62 fastened, as a separate element, within the channel of the hat shaped cross section carrier track 55 by bolts 63, similar to FIG. 4; and a second pinion gear 64 axially aligned with said first pinion gear 60 and rotatable therewith.

Control of the extension or retraction movement of the fore flap section 40 is effected by the ball-screw actuator 50 which may be hydraulically or electrically driven. As the ball-screw actuator 50 extends the fore flap section 40 from the stowed position shown in FIG. 9 to the fully extended position shown in FIG. I0, the fore flap support carrier 42 will first be pincipally extended chordwise rearwardly from the wing I5 along the horizontal portion of the cantilever beam 44 and then tilted to alter its angle-of-incidence relative to the wing I5 along the downwardly inclined portion of the cantilever beam 44. Extension movement of the fore flap section 40 will be accompanied by a coordinated clockwise rotation of the first and second pinion gears 60 and 64 respectively, and effect through meshing engagement with carrier track 55, an aft reciprocation movement of the aft flap segment 4I to the double-slotted flap configuration shown in FIG. I0. Both flap sections will move substantially conjointly to vary their angle-of-incidence relative to the wing I5. The angle-of-incidence of both flap sections will increase during movement from the position of FIG. 9, through to the position of FIG. I0; and conversely, the angle-of-incidence of both flap sections will decrease as they are moved from their position of FIG. I0, through to their position of FIG. 9.

While the invention has been disclosed with reference to preferred embodiments, it is to be understood that those modifications and changes which become obvious to a person skilled in the art to which this invention pertains, as a result of the teaching hereof, are considered to be encompassed by the following claims.

## Claims

I. Mechanism for extending a high-lift device such as an auxiliary airfoil relative to a main airfoil, comprising a carrier track connected to said high-lift device, extending substantially chordwise of said main airfoil and comprising a toothed section, guide means secured to said main airfoil and being in guiding contact with said track for support thereof, and a pinion gear adapted to gear in meshing engagement with said toothed section for extending and retracting the high-lift device, **characterized** in that the carrier track has a hat-shaped cross-section forming a channel along the length thereof, and in that the toothed section is separate from the carrier track and is formed by a gear rack, mounted within said track channel with its gear teeth facing downwardly.

2. Mechanism according to claim I, **characterized** in that the depth of the channel is at least equal to the overall height of the gear rack.

3. Mechanism according to claim I or 2, modified in that the gear rack is replaced by a series of rollers mounted between the interior side walls of said track channel and having their axes transverse thereto.

FIG. 1

FIG. 7

FIG. 2

FIG. 3

26

15A

18

17

30

26

15C

16

26

15B

26

25

21

20

24

23

27

7

7

022/643

FIG. 4

FIG. 5

FIG. 11

FIG. 6

FIG. 8

0227643

FIG. 9

FIG. IO

0227643